# EUROPEAN PATENT APPLICATION

(11) **EP 1 191 715 A2**
(43) Date of publication of application: **27.03.2002**
(21) Application number: 01000449.7
(22) Date of filing: 12.09.2001
(51) Int. Cl.: H04B 10/10

(54) **Optical wireless network with direct optical beam pointing**

(30) Priority: 20.09.2000 US 234081 P
(71) Applicant: Texas Instruments Inc., Dallas, Texas 75251 (US)
(72) Inventor: Dewenter, William G., Bellbrook, OH 45305 (US)
(74) Representative: Holt, Michael

(57) **Abstract**

An optical wireless network system is disclosed. A transmitter (45) includes a laser (36) for generating a light beam that is reflected from a micromirror (42) toward a receiver. The receiver includes a lens for receiving the incident light (I) and directing the light to a photodiode. A reflective ring surrounds the lens at the receiver, to reflect light back to the transmitter (45). The reflective ring is preferably formed of corner cube elements so that the light is reflected back toward its source, over a range of angles of incidence. A photodiode (48) at the transmitter (45) receives a signal that is applied to control circuitry (52) which in turn controls the aim of the mirror (42) in response to the reflected light (R), so that the aim of the mirror (42) may be optimized.

## Description

### TECHNICAL FIELD OF THE INVENTION

This invention is related to the field of optical wireless communications, and is more specifically directed to the directing of light beams with micromirror assemblies as used in such communications.

### DESCRIPTION OF THE RELATED ART

Modern data communications technologies have greatly expanded the ability to communicate large amounts of data over many types of communications facilities. This explosion in communications capability not only permits the communications of large databases, but has also enabled the digital communications of audio and video content. This high bandwidth communication is now carried out over a variety of facilities, including telephone lines (fiber optic as well as twisted-pair), coaxial cable such as supported by cable television service providers, dedicated network cabling within an office or home location, satellite links, and wireless telephony.

Each of these conventional communications facilities involves certain limitations in their deployment. In the case of communications over the telephone network, highspeed data transmission, such as that provided by digital subscriber line (DSL) services, must be carried out at a specific frequency range to not interfere with voice traffic, and is currently limited in the distance that such high-frequency communications can travel. Of course, communications over "wired" networks, including the telephone network, cable network, or dedicated network, requires the running of the physical wires among the locations to be served. This physical installation and maintenance is costly, as well as limiting to the user of the communications network.

Wireless communication facilities of course overcome the limitation of physical wires and cabling, and provide great flexibility to the user. Conventional wireless technologies involve their own limitations, however. For example, in the case of wireless telephony, the frequencies at which communications may be carried out are regulated and controlled; furthermore, current wireless telephone communication of large data blocks, such as video, is prohibitively expensive, considering the per-unit-time charges for wireless services. Additionally, wireless telephone communications are subject to interference among the various users within the nearby area. Radio frequency data communication must also be carried out within specified frequencies, and is also vulnerable to interference from other transmissions. Satellite transmission is also currently expensive, particularly for bi-directional communications (i.e., beyond the passive reception of television programming).

A relatively new technology that has been proposed for data communications is the optical wireless network. According to this approach, data is transmitted by way of modulation of a light beam, in much the same manner as in the case of fiber optic telephone communications. A photoreceiver receives the modulated light, and demodulates the signal to retrieve the data. As opposed to fiber optic-based optical communications, however, this approach does not use a physical wire for transmission of the light signal. In the case of directed optical communications, a line-of-sight relationship between the transmitter and the receiver permits a modulated light beam, such as that produced by a laser, to travel without the waveguide of the fiber optic.

It is contemplated that the optical wireless network according to this approach will provide numerous important advantages. First, high frequency light can provide high bandwidth, for example ranging from on the order of 100Mbps to several Gbps, using conventional technology. This high bandwidth need not be shared among users, when carried out over line-of-sight optical communications between transmitters and receivers. Without the other users on the link, of course, the bandwidth is not limited by interference from other users, as in the case of wireless telephony. Modulation can also be quite simple, as compared with multiple-user communications that require time or code multiplexing of multiple communications. Bi-directional communication can also be readily carried out according to this technology. Finally, optical frequencies are not currently regulated, and as such no licensing is required for the deployment of extra-premises networks.

These attributes of optical wireless networks make this technology attractive both for local networks within a building, and also for external networks. Indeed, it is contemplated that optical wireless communications may be useful in data communication within a room, such as for communicating video signals from a computer to a display device, such as a video projector.

It will be apparent to those skilled in the art having reference to this specification that the ability to correctly aim the transmitted light beam to the receiver is of importance in this technology. Particularly for laser-generated collimated beams, which can have quite small spot sizes, the reliability and signal-to-noise ratio of the transmitted signal are degraded if the aim of the transmitting beam strays from the optimum point at the receiver. Especially considering that many contemplated applications of this technology are in connection with equipment that will not be precisely located, or that may move over time, the need exists to precisely aim and controllably adjust the aim of the light beam.

A copending United States patent application having the assigned serial number 09/310,284, filed May 12, 1999, and entitled "Optical Switching Apparatus", discloses a micromirror assembly for directing a light beam in an optical switching apparatus. As disclosed in this application, the micromirror reflects the light beam in a manner that may be precisely controlled by electrical signals. As disclosed in this patent application, the micromirror assembly includes a silicon mirror capable of rotating in two axes. One or more small magnets are attached to the micromirror itself; a set of four coil drivers are arranged in quadrants, and are current-controlled to attract or repel the micromirror magnets as desired, to tilt the micromirror in the desired direction.

Because the directed light beam, or laser beam, has an extremely small spot size, precise positioning of the mirror to aim the beam at the desired receiver is essential in establishing communication. It is contemplated that this precision positioning be accomplished by way of calibration and feedback, so that the mirror is able to sense its position and make corrections.

### SUMMARY OF THE INVENTION

The present application discloses a system and method that provide an optical wireless receiver that can provide direct feedback to the transmitter regarding its aiming position. Such a receiver may provide such feedback passively.

The present application yet further discloses a transmitter and receiver system that provides feedback to the transmitter without requiring a secondary communications channel.

The present invention may be implemented into an optical wireless network by providing a receiver lens surrounded by a reflective annulus. The annulus is preferably formed of a retro-reflector, such as corner cubes, to reflect a directed light beam back to the transmitter over a wide range of angles of incidence. The present invention eliminates the need for a secondary feedback communications channel.

### BRIEF DESCRIPTION OF THE SEVERAL VIEWS OF THE DRAWING

For a more complete understanding of the present invention, and the advantages thereof, reference is now made to the following detailed description of certain particular and illustrative embodiments and the features and aspects thereof, by way of example only, and with reference to the figures of the accompanying drawings in which:

Figure 1 is a schematic drawing of an optical wireless network using a micromirror assembly, and in which a secondary feedback channel is provided.

Figures 2a and 2b are perspective and cross-sectional views, respectively, of a receiver in the optical wireless network.

Figures 3a and 3b are cross-sectional views illustrating the operation of corner cube elements.

Figure 4 is a schematic diagram illustrating the construction of a transmitter in the optical wireless network.

Figure 5 is a perspective view of the receiver of Figures 2a and 2b illustrating the operation of a preferred embodiment of the invention.

### DETAILED DESCRIPTION OF THE INVENTION

The present invention will be described in connection with its preferred embodiments, with an example of an application of these preferred embodiments in a communications network. It is contemplated, however, that the present invention may be realized not only in the manner described below, but also by way of various alternatives which will be apparent to those skilled in the art having reference to this specification. It is further contemplated that the present invention may be advantageously implemented and used in connection with a variety of applications besides those described below. It is therefore to be understood that the following description is presented by way of example only, and that this description is not to be construed to limit the true scope of the present invention.

In particular, the present invention will be described in connection with a single simplex data channel, for ease and clarity of description. It is contemplated that those skilled in the art having reference to this specification will be readily able to implement the present invention in full-duplex communications, and in other applications.

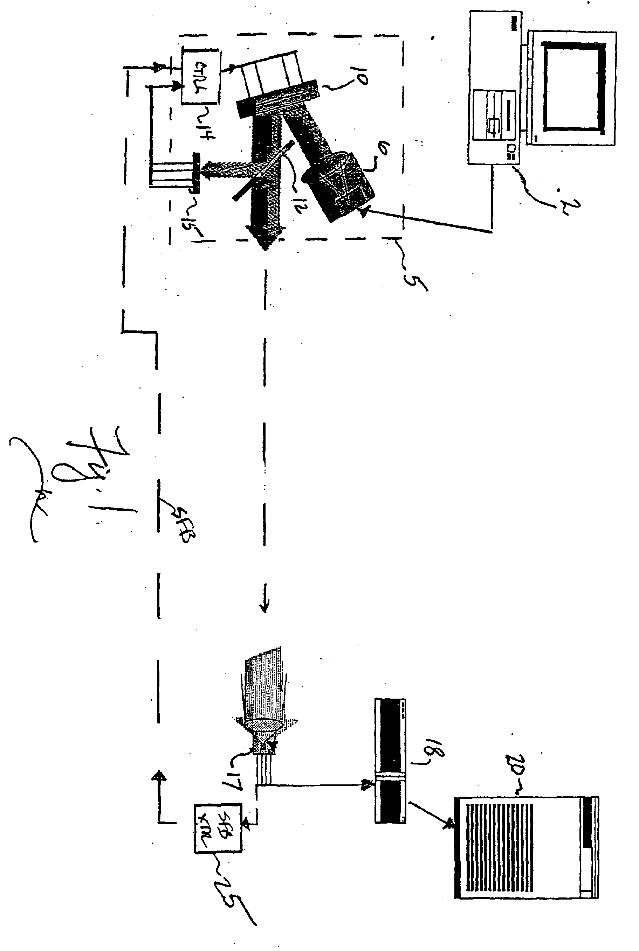

Referring first to Figure 1, an example of an optical wireless network will be illustrated, to provide context for the present invention. In this simple example, unidirectional communications are to be carried out from computer 2 to server 20, by way of modulated directed light. In this example, computer 2 is a conventional microprocessor based personal computer or workstation, including the appropriate network interface adapter for outputting the data to be communicated. For example, computer 2 may include a 100Base-T to 100Base-FX converter, coupled to a laser driver that generates modulated control signals that are then applied to transmitter optical module 5, which aims a directed light beam at the desired receiver 17, and which modulates the light beam to communicate the data.

Alternatively, the transmitting source may be a network switch or router, a source of video data such as a DVD player or a television set-top converter box, or the like, rather than computer 2 as shown. It is contemplated that the present invention may be used in connection with effectively any source of digital data.

In this example, transmitter optical module 5 includes modulating laser 6, which generates a collimated coherent light beam of the desired wavelength (e.g., 850 nm) and power (e.g., on the order of 4 to 5 µW/cm² measured at 50 meters, with a spot size of on the order of 2.0 to 2.5 mm in diameter). Modulating laser 6 modulates this light beam according to the digital data being transmitted, in response to the laser driver driven by computer 2. The modulation scheme used preferably follows a conventional data communications standard, such as those used in connection with fiber optic communications for similar networks. The modulated laser beam exits modulating laser 6 and is reflected from micromirror assembly 10 toward receiver 17.

The construction of an example of a micromirror assembly 10 is described in detail in co-pending U.S. patent application S.N. 09/310,284. In general, micromirror assembly 10 includes a mirror element formed of a single piece of material, preferably single-crystal silicon, photolithographically etched in the desired pattern, to integrally form the mirror surface 29, and its supporting hinges, gimbals, and frame. To improve reflectivity, the mirror surface is preferably plated with a metal, such as gold or aluminum. One or more permanent magnets are then attached to the mirror and gimbals, to enable rotation of the mirror in the desired direction in response to a magnetic field generated by nearby coil driver magnets to which currents of the desired magnitude and polarity are applied.

On the receiver end, receiver 17 captures the incoming directed light beam, and converts the modulated light energy to an electrical signal; for example, receiver 17 includes a photodiode that modulates an electrical signal in response to the intensity of detected light. The output of this photodiode is then amplified as necessary, and converted into a conventional network protocol, such as by way of a 100Base-FX to 100Base-T converter. Such other conventional receiver circuitry, such as demodulators, filters, and the like, are also provided. The demodulated communicated electrical signal is then forwarded from receiver 17 to router 18, and thus into the receiving network, for eventual distribution to server 20, in this example.

As evident from Figure 1 and the foregoing description, this example illustrates a unidirectional, or simplex, communications approach, for ease of this description. It will be appreciated by those skilled in the art that bi-directional, or duplex, communications may be carried out by providing another transmitter-receiver pair for communicating signals in the opposite direction (router 18 to computer 2).

The communications arrangement of Figure 1 may be utilized in connection with a wide range of applications, beyond the simple computer-to-network example suggested by Figure 1. For example, it is contemplated that each of multiple computers in an office or other workspace may communicate with one another and with a larger network by way of modulated light to a central receiver within the room, and also between rooms by way of relayed communications along hallways or in a space frame. Other indoor applications for this optical wireless communications may include the communication of video signals from a computer or DVD player to a large-screen projector. It is further contemplated that optical wireless communications in this fashion may be carried out in this manner but on a larger scale, for example between or among buildings.

The positioning of micromirror assembly 10 must be precisely controlled to aim the modulated laser beam at receiver 17, and thus optimize the signal-to-noise ratio of the transmitted signals. It is contemplated that this precision positioning is preferably accomplished by way of calibration and feedback, so that the mirror is able to sense its position and make corrections.

In this example, receiver 17 applies a signal indicative of the received signal intensity to secondary feedback transmitter 25. Secondary feedback transmitter 25 then provides a secondary feedback signal SFB to control circuitry 14 of transmitter optical module 5. The medium of secondary feedback signal SFB can be any one of a number of conventional communications media, considering that the bandwidth requirements of secondary feedback signal SFB are very low. This signal may be communicated by a radio signal in order to maintain the network as fully wireless, or alternatively over a telephone line or other hardwired connection. Again, it is contemplated that the secondary feedback communications channel will generally not be a high bandwidth link, considering that the optical wireless network itself is being used to establish such high bandwidth communications.

As shown in this example, the reflected laser beam impinges beam splitter 12. Beam splitter 12 transmits the majority of the energy to receiver 17, but reflects a portion of the energy to position sensitive detector (PSD) 15. PSD 15 provides signals to control circuitry 14, indicating the position of the reflected light that it receives. Control circuitry 14 then issues control signals to micromirror assembly 10 to direct its angle of reflection in response to the signals from PSD 15 and in response to the secondary feedback signal SFB from transmitter 25 at the receiver end, thus optimizing the aim of the directed laser beam at receiver 17. In one example, during setup of the transmission, micromirror assembly 10 and PSD 15 "sweep" the aim of the directed laser beam across the general area of receiver 17. In response, receiver 17 issues the secondary feedback signal SFB to control circuitry 14 according to the received energy over time. These "pings" may be compared with the instantaneous position of micromirror assembly 10 as measured by PSD 15, to calibrate and optimize the aim of micromirror assembly 10 to achieve maximum energy transmission. Once this aim is set, communications may then be carried out. It is contemplated, however, that adjustments may be necessary due to external factors such as building or equipment movement and the like. These adjustments may be carried out by way of feedback from receiver 17 (either over the secondary channel or as transmit mode feedback in a duplex arrangement), or by periodically repeating the measurement and sweeping.

The use of a secondary communications channel to communicate feedback regarding the positioning of the mirror in micromirror assembly 10 is relatively cumbersome, however. Of course, the implementation of a secondary channel itself is itself undesired, considering that the purpose of the optical wireless communications network is to provide communications without radio or wired communications. These secondary channel communications necessarily involve latency in the positioning of the beam, along with a relatively cumbersome start-up algorithm. Furthermore, the arrangement of Figure 1 also requires local detection of the aim of mirror 10, such local detection including beam splitter 12 and position sensitive detector (PSD) 15. Besides adding cost to the system, the intensity of the light signal is inherently reduced by beam splitter 12.

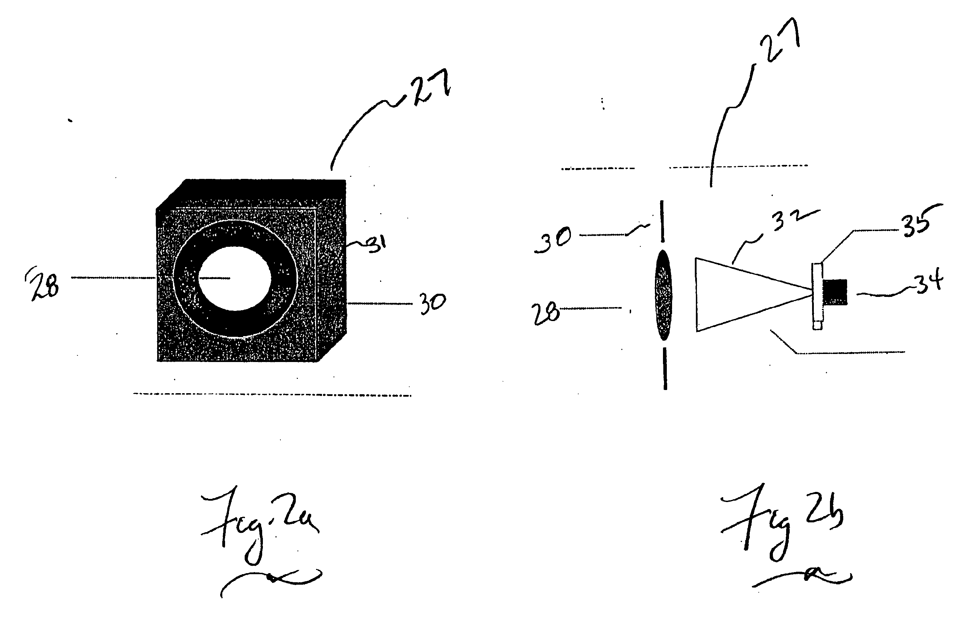

Referring now to Figures 2a and 2b, receiver 27 will now be described in detail. As shown in the perspective view of Figure 2a, receiver 27 is embodied in housing 31. On the side of housing 31 that is to receive the incident light from the transmitter, lens 28 is surrounded by reflector ring 30 in this embodiment of the invention. Lens 28 is a conventional lens for receiving and focusing the directed light beam from the transmitter. As such, the aim of the transmitted beam is optimally directed coaxially with lens 28. As shown in the cross-sectional view of receiver 27 illustrated in Figure 2b, light passing through lens 28 is collected by collection cone 32 to impact photodiode 34, which modulates an electrical signal according to the intensity of the light that it receives. Narrow-band filter 35 is provided at photodiode 34, to filter undesired wavelength light from that received by photodiode 34.

As shown in Figures 2a and 2b, reflector ring 30 surrounds lens 28. According to the present invention, reflector ring 30 reflects incident light back to the transmitter as direct optical feedback of the aim of the transmitted light. For example, if the incident light has a spot size that is approximately the size of the outer diameter of reflector ring 30, the light reflected from reflector ring 30 will be at a maximum amplitude when the incident light beam is properly centered coaxially with lens 28. The transmitter may include the necessary photodetection capability to receive the reflected light as feedback.

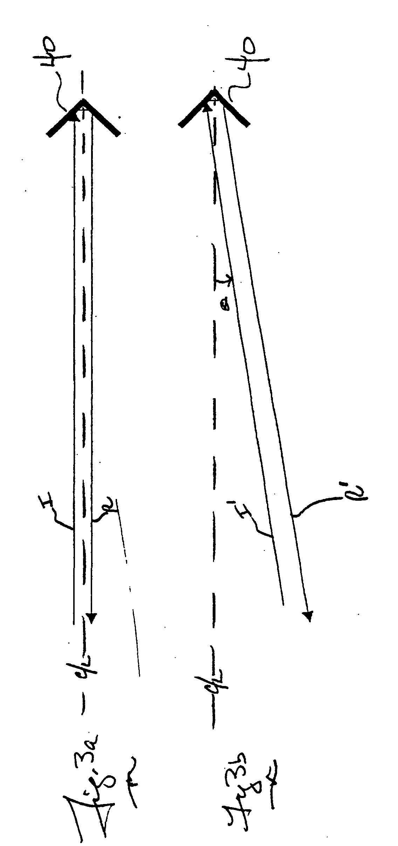

Reflector ring 30 is constructed of conventional "corner cubes" or "retro-reflectors", so that incident light reflected from reflector ring 30 is directed back at its source, over a wide range of angles of incidence. Corner cubes and retro-reflectors are well known for reflecting light back to its source; examples of these devices include reflectors for bicycles and other vehicles, traffic signs, reflective clothing, and the like. Figures 3a and 3b illustrate the principle of operation of a corner cube element 40. As shown in Figures 3a and 3b, corner cube element 40 has perpendicular reflective surfaces, with a center line C/L defined at their vertex and extending at equal 45° angles therefrom. Figure 3a illustrates the example of incident light I traveling parallel to center line C/L; incident light I reflects from both perpendicular surfaces of element 40, and with reflected light R traveling along a line that is also parallel to center line C/L. In the case of Figure 3b, however, incident light I' travels along a line that is at an angle θ from center line C/L. Upon reaching corner cube element 40, however, this incident light I' reflects from the two perpendicular surfaces back toward the source, with reflected light R' also following angle θ, parallel to incident light I'. As such, corner cube element 40 reflects incident light back toward its source.

Those skilled in the art will recognize that this effect operates in two dimensions, as well; as such, conventional corner cubes are constructed in the form of inner surfaces of cubes. Such construction is preferred for reflector ring 30 of receiver 27 according to this preferred embodiment of the invention. A particular example of preferred material for reflector ring 30 is an adhesive reflective film, such as is commonly available for use in traffic signs and the like.

The addition of reflector ring 30 is the only necessary change at the receiver end of the network. Considering the extremely low cost of corner cube material, the present invention may be readily implemented at the receiver end of the network.

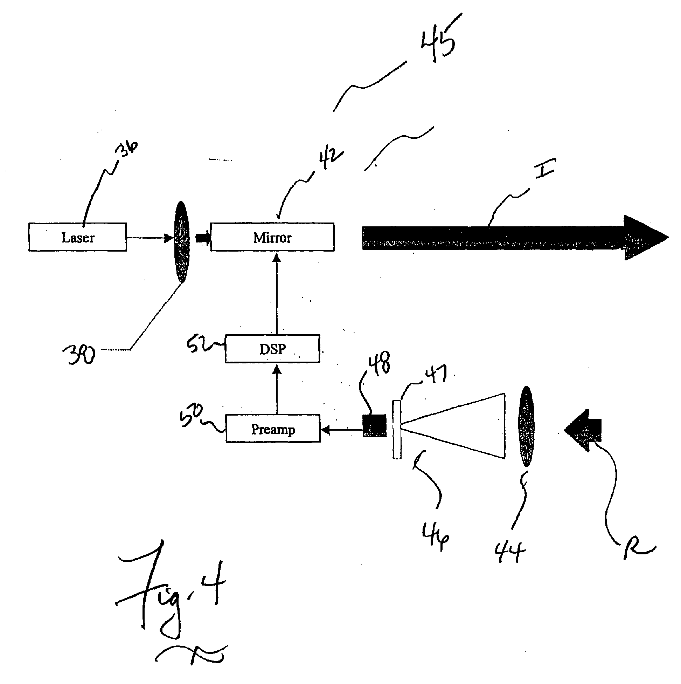

Referring now to Figure 4, the construction and operation of transmitter module 45 will now be described. Transmitter module 45 provides the functions of modulating and transmitting the light data beam to receiver 27 of Figures 2a and 2b, and of receiving reflected light from receiver 27 as positional feedback.

On the transmit side, transmitter module 45 includes laser 36 which generates a directed collimated light beam that is modulated according to the desired data signal. Typically, the modulation of the laser beam is accomplished simply by switching laser 36 on and off; alternatively, a separate modulator may be interposed after laser 36 in transmitter 45. The modulated laser beam passes through lens 38 to expand the size of the beam to correspond to the size of reflector ring 30 at receiver 27. This beam is then aimed by mirror 42 toward receiver 27, as incident light beam I. Because of the corner cubes of reflector ring 30 that reflect light back toward its source, reflected light R returns to transmitter module 45.

Transmitter module 45 may include a receive side. Lens 44 is disposed near mirror 42. Collector cone 46 is disposed to receive light from lens 44, and to direct this light through narrow-band filter 47 to photodiode 48. Photodiode 48 modulates an electrical signal according to the intensity of light that it receives, through lens 44 and filter 47 in this case. Preamplifier 50 amplifies the signal modulated by photodiode 48, and applies this signal to digital signal processor (DSP) 52. DSP 52, which is preferably a relatively high performance programmable digital signal processor device such as the 320C5x and 320C6x families of DSPs available from Texas Instruments Incorporated, analyzes the signal from preamplifier 50 and controls the aim of mirror 42 accordingly.

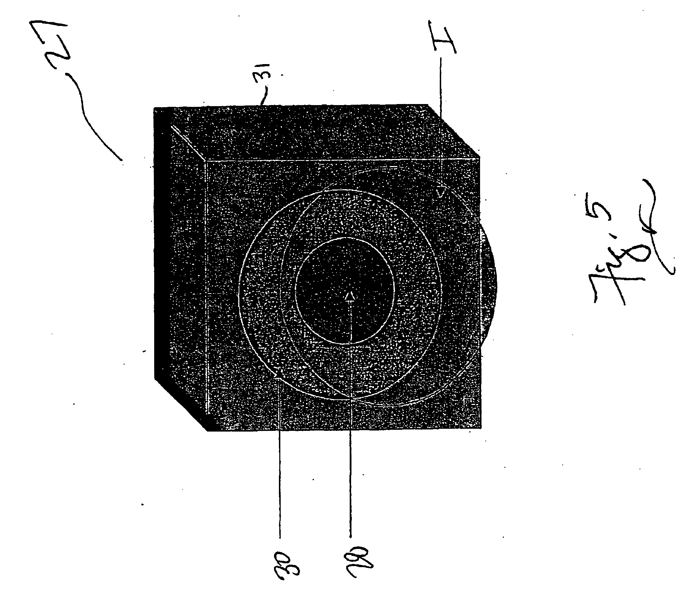

Various approaches for control of mirror 42 responsive to the reflected light R may be followed. For example, as noted above, lens 38 may spread the modulated laser beam to have a spot size that is on the order of the outer diameter of reflector ring 30. An example of incident light I having such a spot size is illustrated in Figure 5. In this example, incident light I irradiates lens 28, but its aim is not optimized since incident light I is not concentric with lens 28. Reflective ring 30 will, in this example, reflect light back to transmitter 45. The intensity of the reflected light R will not be at a maximum, however, because portions of reflective ring 30 are not illuminated by incident light I. The signal received by transmitter 45 via lens 44 and photodiode 48 is applied to DSP 52 and recorded. DSP 52 then follows a search algorithm to adjust the aim of mirror 42, and thus the location of incident light I at receiver 27. For example, DSP 52 can scan the aim of mirror 42 and follow a maximization algorithm based upon the amplitude of the reflected light R received by photodiode 48. Such maximization will eventually result in mirror 42 being aimed so that incident light I is substantially concentric with lens 28, as this will provide the maximum intensity of reflected light R.

Alternatively, if the spot size of incident light I is less than the diameter of reflector ring 30, indeed smaller than the inner diameter of reflector ring 30, a similar optimization algorithm may be performed by DSP 52. In this case, however, DSP 52 would search for a minimum reflected light R intensity that is present between two maxima of this intensity; the maxima would be detected when the incident light I impinges reflector ring 30 on any side of lens 28, with the local minimum therebetween occurring with incident light I being substantially centered on lens 28.

These and other optimization algorithms are contemplated to be particularly useful in connection with the present invention. It is contemplated that those skilled in the art having reference to this specification will be readily able to implement such alternative techniques.

The present invention provides numerous important advantages in the transmission of signals over an optical wireless network. First, the necessary feedback and control of the aim of the transmitting beam is provided without requiring a secondary feedback communications channel. By using reflected light, the latency of the feedback is greatly reduced, since the feedback is direct and traveling at the speed of light. Further, the present invention may be implemented at relatively low cost, especially at the receiver end, with the feedback signal generated in a completely passive manner. The optics necessary for the present invention are relatively simple, as are the optimization algorithms for aiming the mirror. It is therefore contemplated that the present invention will provide improved aiming performance at less cost and better performance.

While the present invention has been described according to its preferred embodiments, it is of course contemplated that modifications of, and alternatives to, these embodiments, such modifications and alternatives obtaining the advantages and benefits of this invention, will be apparent to those of ordinary skill in the art having reference to this specification and its drawings. It is contemplated that such modifications and alternatives are within the scope of this invention.

## Claims

1. A communications system, comprising:
a transmitter comprising: a light source for generating a directed light beam modulated to transmit a data signal; a controllable mirror for directing the light beam toward a receiver; a photodiode for receiving light reflected from substantially the same direction as the light is directed by the mirror; and control circuitry coupled to the photodiode and the mirror for controlling the aim of the mirror; and
a receiver comprising: a photodiode for receiving incident light from the transmitter through a lens; and a reflective ring surrounding the lens for reflecting incident light from the transmitter back to the transmitter.

2. The system of claim 1, wherein the mirror comprises:
a mirror element formed from a single piece of crystalline material, the mirror element having a frame, a mirror surface, and a plurality of hinges.

3. The system of claim 1 or claim 2, wherein the reflective ring comprises a plurality of corner cube elements.

4. The system of any preceding claim, wherein the light source comprises a laser.

5. The system of claim 4, wherein the transmitter further comprises:
a lens for spreading the modulated laser beam to have a spot size approximately the same size as an outer diameter of the reflective ring.

6. A transmitter for use in the communication system of any of claims 1 to 5.

7. A receiver for use in the communication system of any of claims 1 to 5.

8. A method of transmitting data signals, comprising:
generating a modulated light beam;
orienting a micromirror to reflect the modulated light beam toward a receiver;
receiving reflected light from the transmitter; and
adjusting the orientation of the micromirror responsive to the received reflected light.

9. The method of claim 8, wherein the adjusting step comprises:
iteratively adjusting the orientation of the micromirror to maximize the intensity of the received reflected light.
